# EUROPÄISCHE PATENTANMELDUNG

(11) **EP 2 293 139 A1**
(43) Veröffentlichungstag der Anmeldung: **09.03.2011**
(21) Anmeldenummer: 10007493.9
(22) Anmeldetag: 20.07.2010
(51) Int. Cl.: G02F 1/13357, G02B 3/00

(54) **Mehrschichtige Beleuchtungseinheit mit verbesserten Eigenschaften und deren Verwendung**

(30) Priorität: 01.08.2009 EP 09009955
(71) Anmelder: Bayer MaterialScience AG, 51368 Leverkusen (DE)
(72) Erfinder: Stollwerck, Gunther, 47802 Krefeld (DE); Meyer, Klaus, 41539 Dormagen (DE); Lyding, Andreas, 47057 Duisburg (DE); Pudleiner, Heinz, 47800 Krefeld (DE); Walze, Günther, 11049 Taipei (TW)

(57) **Zusammenfassung**

Die Erfindung betrifft eine Beleuchtungseinheit (1) mindestens enthaltend einen Reflektor, zwei oder mehr Lichtquellen (4) und mindestens eine Diffuserplatte (5), wobei die Lichtquellen jeweils einen Abstand von mindestens ≥ 30 mm zueinander aufweisen und der Abstand der Lichtquellen zur Diffuserplatte ≤ 25 mm beträgt und weiterhin die Diffuserplatte (5) eine Lenticularplatte ist, wobei auf der Lenticularplatte mindestens eine Advanced Compound Parabolic Concentrator Streufolie (6,7) und darauf mindestens eine weitere Streufolie (8) angeordnet ist. Die Erfindung betrifft weiterhin einen Flüssigkristall-Bildschirm enthaltend eine solche Beleuchtungseinheit.

## Beschreibung

Die vorliegende Erfindung betrifft eine mehrschichtige Beleuchtungseinheit mit verbesserten Eigenschaften und deren Verwendung in Hinterleuchtungseinheiten und Bildschirmen.

Mehrschichtige Folienverbundstoffe, insbesondere mehrschichtige optische Folien gewinnen aufgrund einer Vielzahl von kommerziellen Anwendungen in zunehmendem Maße an Bedeutung. Ein Anwendungsgebiet ist das der Flüssigkristall-Bildschirme. Diese enthalten im Wesentlichen zwei Komponenten die sogenannte Backlight-Unit, in der das Licht erzeugt und durch verschiedene optische Schichten modifiziert wird und das LCD (Liquid Crystal Display). Dieses enthält rote, grüne und blaue Farbfilter und Flüssigkristalle, die durch feine Stromimpulse abwechselnd aktiviert werden und das Licht passieren lassen.

Grundsätzlich weist eine Hinterleuchtungseinheit (Backlight-Unit [BLU]) mit Direkt-Hinterleuchtung (Direct Light System) eines LCDs den nachfolgend beschriebenen Aufbau auf. Sie besteht in der Regel aus einem Gehäuse, in dem je nach Größe der Backlight-Unit eine unterschiedliche Anzahl an Leuchtstoffröhren, sogenannte CCFL (Cold Cathode Fluorescent Lamp) angeordnet sind. Meist sind die Leuchtstoffröhren parallel zueinander angeordnet. Es ist bekannt auch andere Lichtquellen, beispielsweise LED, einzusetzen, was den prinzipiellen Aufbau der BLU jedoch nicht weiter beeinflusst. Die Gehäuseinnenseite ist mit einer weiß-diffus Licht reflektierenden Oberfläche ausgestattet. Auf diesem Beleuchtungssystem liegt eine Diffuserplatte auf, die eine Dicke von 1 bis 3 mm aufweisen kann, bevorzugt eine Dicke von 1.1 bis 2 mm. Auf der Diffuserplatte befindet sich ein Satz von Kunststofffolien, die die Lichtausbeute optimieren. Die Diffuserfolie streut ebenso wie die Diffuserplatte das Licht gleichmäßig, so dass das Streifenmuster der Leuchtstoffröhren verwischt und eine möglichst homogene Ausleuchtung erzielt werden kann. Danach folgt eine Prismenfolie (Brightness Enhancing Film [BEF]). Deren Oberfläche ist so strukturiert, dass aus verschiedenen Richtungen einfallendes Licht direkt nach vom in Richtung des LCD ausgerichtet wird. Auf der Prismenfolie liegt üblicherweise eine weitere optische Folie, der so genannte Dual Brightness Enhancing Film (DBEF) auf. Der DBEF lässt nur exakt linear polarisiertes Licht hindurch, dass von den Kristallen im LCD verwertet werden kann. Licht mit anderer Ausrichtung wird an der DBEF zur reflektierenden Oberfläche der Gehäuseinnenseite zurückgeworfen und dort erneut nach vom Richtung DBEF gespiegelt. Die DBEF erhöht auf diese Weise die Ausbeute korrekt polarisierten Lichts und damit die Effizienz der gesamten BLU. Die linear polarisierende Folie liegt direkt unter dem darüber befindlichen LC-Display.

Bei der Verwendung dieses herkömmlichen Aufbaus ist ein Problem, dass insbesondere einem besonders großen Abstand der Leuchtstoffröhren zueinander und einem geringen Abstand der Leuchtstoffröhren zur darüber liegenden Diffuserplatte eine ausreichende Homogenisierung des Lichts nicht mehr erzielt werden kann. Die Lichtquellen sind dann auf dem LCD für das menschliche Auge sichtbar. Die mögliche Homogenisierung der Lichtverteilung, also die Fähigkeit der Beleuchtungseinheiten die Lichtquellen und deren Anordnung gewissermaßen zu verstecken, wird auch als "Hiding Power" bezeichnet.

Aus der US 5,592,332 sind Lenticularplatten zur Homogenisierung der Lichtverteilung bekannt. Es wird ebenfalls die Anordnung gekreuzter Lenticularplatten offenbart, ohne deren Funktion jedoch näher zu beschreiben.

Aus WO 2007/094426A1 sind Anordnungen mit gekreuzten Lenticularplatten bekannt, die über einem dicht gepackten LED Array angeordnet sind. Der Abstand zwischen LEDs und Streuplatte ist hierin nicht beschrieben.

Aus der Offenlegungsschrift WO 2008/047794 sind Beleuchtungsaufbauten mit gekreuzten Lenticularfolien bekannt, die in einer Backlight Unit mit einem Abstand von 24 mm der Leuchtstoffröhren zueinander verwendet werden.

Aus der DE 10 2007 033300 sind Streufolien und -platten mit lichtlenkenden Strukturen bestehend aus einem Linsenbereich und einem Compound Parabolic Concentrator (CPC)-Bereich und deren Einsatz als Diffuserplatten in einer Back-Licht Unit bekannt. Hier sind Abstände zwischen den Lampen und Abstände zwischen Lampen und Streuplatte angegeben.

Das Anwendungsgebiet der Flachbildschirme stellt an die Verarbeitbarkeit und weiteren Eigenschaften der darin verwendeten optischen Folien hohe Ansprüche. Bei der Verwendung von Diffuserplatten in den so genannten Backlight-Units von Flachbildschirmen kommt es insbesondere auch auf eine sehr hohe und homogene Leuchtdichte des Gesamtsystems an, damit die Helligkeit des Bildes des Flachbildschirmes möglichst hoch ist.

Eine Aufgabe der Erfindung ist es daher eine Beleuchtungseinheit bereitzustellen, mit der eine verbesserte Homogenisierung der Lichtverteilung erzielt werden kann. Die erfindungsgemäßen Beleuchtungseinheiten sollen dabei auch für anspruchsvolle Backlight Unit - Aufbauten und LCD-Flachbildschirme geeignet sein und eine ausreichend hohe Homogenität der Lichtverteilung aufweisen. Das Licht soll mittels der Beleuchtungseinheit so homogen verteilt werden können, dass die in der Beleuchtungseinheit eingesetzten Lichtquellen mit dem menschlichen Auge nicht mehr sichtbar sind.

Erfmdungsgemäß wird eine mehrschichtige Beleuchtungseinheit mindestens enthaltend einen Reflektor zwei oder mehr Lichtquellen und mindestens eine Diffuserplatte vorgeschlagen, in der die Lichtquellen jeweils einen Abstand von mindestens ≥ 30 mm voneinander aufweisen und der Abstand der Lichtquellen zur Diffuserplatte ≤ 25 mm beträgt und weiterhin die Diffuserplatte eine Lenticularplatte ist, auf der Lenticularplatte mindestens eine Advanced Compound Parabolic Concentrator (ACPC) Streufolie und auf der ACPC-Streufolie mindestens eine weitere Streufolie angeordnet ist.

Als Lichtquellen können erfindungsgemäß herkömmliche Leuchtstoffröhren eingesetzt werden. Es können erfindungsgemäß gleichermaßen bevorzugt auch andere Lichtquellen, wie zum Beispiel LED's, eingesetzt werden.

Als Reflektor kann erfindungsgemäß bevorzugt wenigstens eine weiße reflektierend Folie eingesetzt werden. Solche Reflektorfolien sind allgemein bekannt.

Erfindungsgemäß wird vorgeschlagen als Diffuserplatte eine Lenticularplatte mit lichtlenkenden Oberflächenstrukturen einzusetzen. Zum Beispiel kann dies eine Diffuserplatte sein, die mit einer Advanced Compound Parabolic Concentrator Struktur hergestellt wurde. Die Herstellung solcher Strukturen und deren Verwendung auf Diffuserplatten ist beispielsweise in der DE 10 2007 033 300 A1 offenbart. Die Oberflächenstrukturen von Streuplatten und Streufolien werden erfindungsgemäß im Weiteren auch einfach als Struktur bezeichnet.

Die Herstellung von Lenticularplatten, die für den Einsatz als Diffuserplatten in erfindungsgemäßen Beleuchtungseinheiten geeignet sind, sind zum Beispiel auch in der Offenlegungsschrift US 2007/0126145 A1 offenbart. Die erfmdungsgemäß eingesetzten Lenticularplatten können beispielsweise eine Dicke von ≥ 0,5 mm bis ≤ 3,0 mm, insbesondere von ≥ 1,2 mm aufweisen.

Auf gleiche Weise können auch die erfindungsgemäß eingesetzten Streufolien mit einer ACPC Struktur versehen werden. Grundsätzlich sind Streufolien hierbei lediglich dünner ausgeführt als die analog hergestellten Diffuserplatten. Ohne auf diesen Wert festgelegt zu sein, werden Streuplatten meist mit einer Dicke von ≥ 1,2 mm hergestellt, wobei Streufolien dann eine Dicke ≤ 1,2 mm aufweisen. Es können erfindungsgemäß bevorzugt eine oder zwei Streufolien mit ACPC-Struktur auf der Lenticularplatte angeordnet werden. Es sind auch Beleuchtungseinheiten mit mehr als zwei Streufolien mit ACPC-Struktur denkbar.

Als Streufolien, die im erfmdungsgemäßen Aufbau auf der ACPC-Streufolie angeordnet werden, können insbesondere Streufolien mit halbkugelartiger Oberflächenstruktur sein. Solche Streufolien mit halbkugelartiger Oberflächenstruktur, die vorteilhaft für erfindungsgemäße Beleuchtungseinheiten verwendet werden können, sind beispielsweise in der Offenlegungsschrift US 2006/0239008 A1 offenbart. Bildlich gesprochen ist die Oberflächenstruktur solcher Folien als eine Vielzahl von Erhebungen auf einem Substrat ausgebildet, die annähernd die Gestalt nebeneinander angeordneter Tropfen haben und wird erfindungsgemäß daher auch als tropfenartige Struktur bezeichnet. Solche Streufolien werden erfindungsgemäß auch als Droplet-Folie bezeichnet. Die Streufolien mit tropfenartiger Struktur können erfindungsgemäß beispielsweise eine Dicke von ≥ 50 µm und ≤ 500 µm, bevorzugt von ≥ 100 µm und ≤ 400 µm aufweisen. Hierbei wird unter Dicke der Folie die maximale Dicke unter Berücksichtigung der Erhebungen verstanden.

Weitere Streufolien, die anstatt der Droplet-Folie eingesetzt werden können, umfassen Streufolien mit Streuadditiven, Streufolien mit einer statistischen Streuoberfläche oder Kombinationen davon.

Erfindungsgemäß wird mit den vorstehend genannten Komponenten ein Beleuchtungsaufbau mit einer speziellen Kombination und Anordnung von strukturierten Streuplatten und -folien auf der Diffuserplatte, einer Lenticularplatte, bereitgestellt, der auch bei einem anspruchsvollen Aufbau mit großen Abständen der Lichtquellen zueinander und besonders geringem Abstand der Lichtquellen zur Diffuserplatte eine besonders gute Homogenisierung der Lichtverteilung ermöglicht. Es kann mit erfindungsgemäßen Beleuchtungseinheiten vorteilhafterweise eine homogene Lichtverteilung mit Helligkeitsschwankungen von ≤ 1 % erzielt werden. Die Effizienz der Homogenisierung des Lichts kann mit den erfindungsgemäßen Beleuchtungseinheiten sogar so gut sein, dass die Helligkeitsschwankungen trotz großer Lichtquellenabstände zueinander und einem besonders vorteilhaftem flachen Aufbau der gesamten Beleuchtungseinheit durch den geringen Abstand der Diffuserplatten zu den Lichtquellen, für das menschliche Auge unsichtbar sind.

Erfindungsgemäß ist es möglich, jedoch weniger bevorzugt, dass zwischen den Lichtquellen und der Lenticularplatte als Diffuserplatte eine weitere Diffuserplatte und/oder Diffuserfolie angeordnet ist. Diese zusätzliche Diffuserplatte kann beispielsweise eine herkömmliche Diffuserplatte aus transparentem Kunststoff mit Streupartikelnsein. Lichtstreuende Kunststoffzusammensetzungen, die für Diffuserplatten und Diffuserfolien in Flachbildschirmen Verwendung finden können, sind beispielsweise in der WO 2007/039130 A1 und der WO 2007/039131 A1 beschrieben. Erfmdungsgemäß ist es aber auch möglich an dieser Position zwischen den Lichtquellen und der Lenticularplatte, also der Diffuserplatte, in der erfindungsgemäßen Beleuchtungseinheit eine Diffuserplatten und/oder Diffuserfolie mit lichtlenkenden Oberflächenstrukturen einzusetzen.

Der Abstand der Lichtquellen, insbesondere von Leuchtstoffröhren, zueinander kann erfmdungsgemäß auch ≥ 40 mm und sogar ≥ 50 mm gewählt werden. Vorteilhafterweise können hierdurch gerade große Beleuchtungseinheiten kostengünstiger hergestellt werden, da insgesamt weniger Lichtquellen bei ausreichender Homogenisierung und Helligkeit verwendet werden müssen. Unter ausreichender Homogenisierung der Lichtverteilung wird erfindungsgemäß verstanden, dass die einzelnen Lichtquellen mit dem menschlichen Auge nicht mehr erkannt werden können.

Der Abstand der Lichtquellen zu der darüber angeordneten Diffuserplatte kann erfindungsgemäß auch ≤21 mm, ≤ 15 mm und sogar ≤ 10 mm betragen. Es wurde überraschend gefunden, dass mit den erfindungsgemäßen Kombinationen von strukturierten Streufolien auch besonders flache Aufbauten mit einer ausreichenden Homogenisierung der Lichtverteilung und ausreichender Helligkeit der Beleuchtungseinheit erhalten werden können.

In einer erfindungsgemäßen Ausführungsform werden als Lichtquellen Leuchtstoffröhren eingesetzt und die Lenticularplatte weist eine lineare Struktur auf, die parallel zur Anordnung der Leuchtstoffröhren ausgerichtet ist. Die Lenticularplatte, die erfindungsgemäß als Diffuserplatte eingesetzt wird, weist eine geriffelte linear strukturierte Oberfläche auf, wobei die lineare Struktur bevorzugt aus parallel zueinander angeordneten röhrenförmigen Linsen besteht. Zum Beispiel kann die lineare Struktur eine ACPC-Struktur sein. Die Lenticularplatte liegt in der erfindungsgemäßen Beleuchtungseinheit direkt oberhalb der Lichtquellen. Es hat sich überraschend gezeigt, dass mit dieser Ausführungsform der erfindungsgemäßen Beleuchtungseinheit, mit der parallelen Ausrichtung der Leuchtstoffröhren zu der linearen Struktur der Diffuserplatte, deren Eigenschaften, insbesondere die optische Qualität und die mögliche Homogenisierung der Lichtverteilung, nochmals verbessert werden konnten

In einer anderen Ausführung der erfindungsgemäßen Beleuchtungseinheit kann die Struktur der Advanced Compound Parabolic Concentrator Streufolie mindestens annähernd in einem Winkel 90 °C zur linearen Struktur der Lenticularplatte angeordnet sein. Bevorzugt wird die Orientierung der Streufolienstrukturen also derart gewählt, dass sie im Wesentlichen senkrecht zueinander ausgestaltet sind. Hierdurch kann die Effizienz der Homogenisierung weiter gesteigert werden.

In einer anderen Ausführung der erfmdungsgemäßen Beleuchtungseinheit kann zwischen der ersten Advanced Compound Parabolic Concentrator Streufolie und der weiteren Streufolie, insbesondere mit halbkugelartiger Oberflächenstruktur, mindestens eine zweite Advanced Compound Parabolic Concentrator Streufolie angeordnet sein. Mit dieser erfindungsgemäßen Kombination von strukturierten Streufolien innerhalb der Beleuchtungseinheit kann auch für besonders anspruchsvolle Beleuchtungsaufbauten, beispielsweise für die Verwendung in Flachbildschirmen eine ausreichende Homogenisierung der Lichtverteilung erzielt werden. Die Qualität der Beleuchtungseinheit kann damit nochmals verbessert werden.

Insbesondere ist in einer weitergehenden Ausgestaltung der Erfindung vorgesehen, dass die Struktur der zweiten Advanced Compound Parabolic Concentrator Streufolie mindestens annähernd in einem Winkel von 90 °C, also im Wesentlichen senkrecht zur Struktur der ersten Advanced Compound Parabolic Concentrator Streufolie ausgerichtet sein kann. Hierdurch kann der erzielte Homogenisierungseffekt noch gesteigert werden. Der Homogenisierungseffekt ist besonders gut, wenn die Struktur der ersten Streufolie dabei wiederum mindestens annähernd in einem Winkel 90 °C zur Struktur der Lenticularplatte angeordnet ist.

In einer anderen Ausgestaltung der erfmdungemäßen Beleuchtungseinheit können auf der weiteren Streufolie, die auf der ACPC-Streufolie aufliegt und die insbesondere eine halbkugelartige Oberflächenstruktur aufweist, eine Prismenfolie und/oder eine Polarisationsfolie angeordnet sein.

Als Prismenfolie kann erfindungsgemäß jede Folie eingesetzt werden, die durch ihre strukturierte Oberfläche aus verschiedenen Richtungen einfallendes Licht in eine bestimmte Richtung ausrichten kann. Bevorzugt kann diese Prismenfolie als sogenannter Brightness Enhancing Film (BEF) in LCDs geeignet sein.

Als Polarisationsfolie kann erfindungsgemäß jede optische Folie verwendet werden, die nur exakt linear polarisiertes Licht hindurch lässt. Diese optische Folie wird in Backlight Units auch als so genannter Dual Brightness Enhancing Film (DBEF) eingesetzt und bezeichnet. Reflektierende Polarisatoren (DBEF) sind im Stand der Technik bekannt. Beispielsweise werden in der WO 1996/19347 multilagige optische Folien als reflektierende Polarisatoren beschrieben. Licht mit anderer Ausrichtung wird an der DBEF zum Reflektor zurückgeworfen und dort erneut nach vom Richtung DBEF gespiegelt. Die DBEF erhöht auf diese Weise die Ausbeute korrekt polarisierten Lichts und damit die Effizienz der gesamten Beleuchtungseinheit. Der DBEF lässt in Flüssigkristall-Bildschirmen vorteilhafterweise nur solches Licht passieren, dass von Kristallen in dem LCD verwertet werden kann. Die linear polarisierende Folie liegt dabei grundsätzlich direkt unter dem darüber befmdlichen LC-Displays.

Diese zusätzlich vorgesehenen Folien, also Prismenfolie und Polarisatorfolie, können im erfindungsgemäßen Aufbau der Beleuchtungseinheit alternativ oder in Kombination miteinander eingesetzt werden und die Effizienz der Beleuchtungseinheit erhöhen.

Die erfindungsgemäße mehrschichtige Beleuchtungseinheit kann beispielsweise besonders vorteilhaft als Hinterleuchtungseinheit für Flachbildschirme eingesetzt und verwendet werden.

Gegenstand der vorliegenden Erfindung ist daher weiterhin eine Backlight Unit, also eine Hinterleuchtungseinheit, die eine vorstehend beschriebene erfindungsgemäße mehrschichtige Beleuchtungseinheit enthält. Hierbei können eine oder mehrere der vorstehend beschriebenen bevorzugten Ausgestaltungen der Beleuchtungseinheit gegebenenfalls alternativ oder in Kombination miteinander verwendet werden. Solche erfindungsgemäßen anspruchsvollen Hinterleuchtungseinheiten weisen neben den guten optischen Eigenschaften eine besonders gute Qualität und optische Leistungsfähigkeit auf. Insbesondere ist die Homogenisierung der Lichtverteilung eine Hauptaufgabe der erfindungsgemäßen Diffuserplatte und des erfindungsgemäßen Diffuserfolien-Sets.

Die Erfindung umfasst auch die Verwendung einer erfindungsgemäßen mehrschichtigen Beleuchtungseinheit in Bildschirmen, insbesondere Flüssigkristall-Bildschirmen. Weiterer Gegenstand ist daher auch ein Bildschirm, insbesondere Flüssigkristall-Bildschirm enthaltend eine erfindungsgemäße Beleuchtungseinheit. Vorteilhafterweise sind die erfindungsgemäßen Beleuchtungseinheiten und Backlight Units für besonders anspruchsvolle und daher auch besonders flache Bildschirmaufbauten geeignet. Vorteilhafterweise können die Lichtquellenabstände dabei besonders groß gewählt werden, wobei erfindungsgemäß eine gute Helligkeit des System und eine gute Homogenisierung der Lichtverteilung erzielt werden können. Die erfindungsgemäßen Bildschirme sind daher einfach im Aufbau und kostengünstig in der Herstellung und von einer guten optischen Qualität.

Die Erfmdung wird nachfolgend im Zusammenhang mit den Figuren näher erläutert, ohne die Erfmdung auf die gezeigten Ausführungsformen zu beschränken.

Es zeigen:
Fig. 1 schematisch eine schräge Draufsicht auf eine erfindungsgemäßen Beleuchtungseinheit,
Fig. 1a eine Abbildung der Helligkeitsvariation der Beleuchtungseinheit aus Fig. 1,
Fig. 1b schematisch eine schräge Draufsicht auf eine erfindungsgemäßen Beleuchtungseinheit,
Fig. 2 schematisch eine schräge Draufsicht auf eine erfindungsgemäße Beleuchtungseinheit mit einer Streufolie mit halbkugelartiger Oberflächenstruktur,
Fig 3 schematisch eine schräge Draufsicht auf eine Beleuchtungseinheit mit einem herkömmlichen Diffuserplatten-Streufolien-Set mit einer Standard Diffuserplatte und drei Streufolien (nicht erfindungsgemäß),
Fig. 3a die mit der Beleuchtungseinheit aus Fig. 3 erzielte Helligkeitsverteilung,
Fig. 4 schematisch eine schräge Draufsicht auf eine Beleuchtungseinheit mit einem herkömmlichen Diffuserplatten-Streufolien-Set mit einer Standard Diffuserplatte und zwei Droplet-Folien (nicht erfindungsgemäß),
Fig. 5 schematisch eine schräge Draufsicht auf eine Beleuchtungseinheit mit einem Diffuserplatten-Streufolien-Set mit einer Lenticular-Diffuser-Platte und zwei Droplet-Folien (nicht erfindungsgemäß),
Fig. 6 schematisch eine schräge Draufsicht auf eine Beleuchtungseinheit mit einem herkömmlichen Diffuserplatten-Streufolien-Set mit Standard-Diffuser-Platte mit einer Prismenfolie (nicht erfindungsgemäß)
Fig. 7 schematisch eine schräge Draufsicht auf eine Beleuchtungseinheit mit einem herkömmlichen Diffuserplatten-Streufolien-Set mit einer Lenticular-Diffuser-Platte und einer Prismenfolie (Stand der Technik) (Vergleichsbeispiel 5)

Die einzelnen Platten und Folien der abgebildeten Beleuchtungseinheiten sind jeweils zur besseren Übersicht in etwas explodierter Darstellung gezeigt.

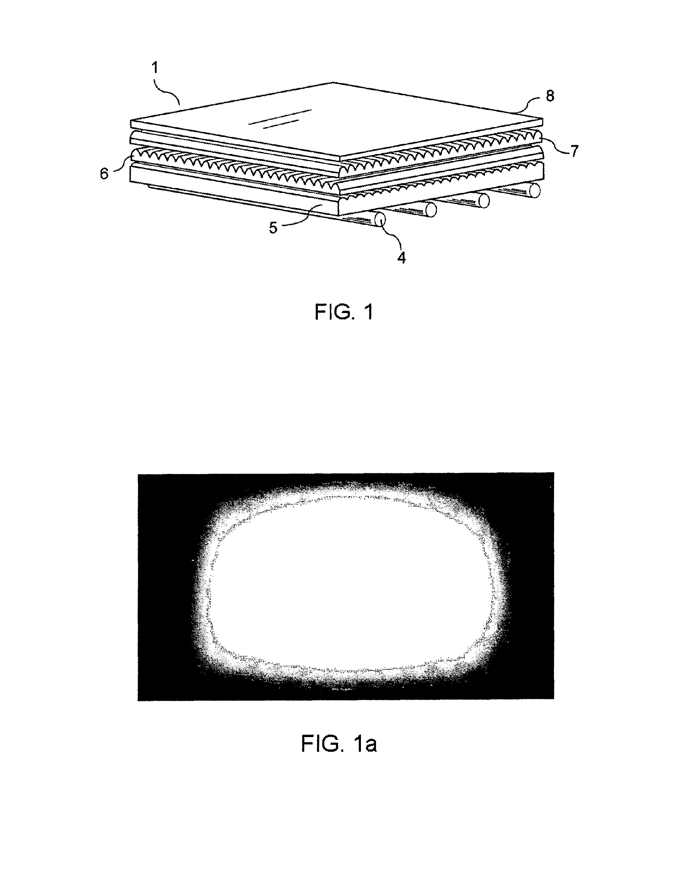

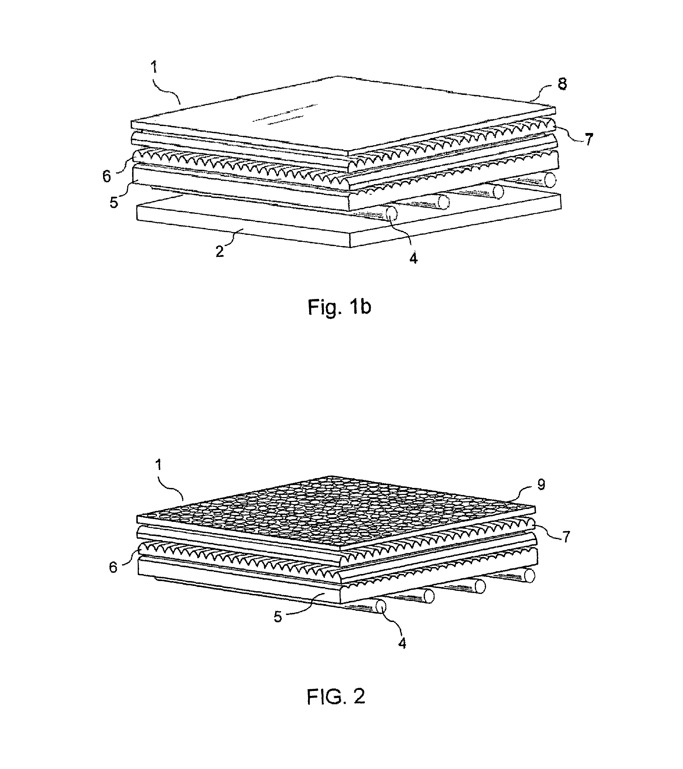

Fig. 1 zeigt eine schräge Draufsicht auf eine Ausführungsform der erfindungsgemäßen Beleuchtungseinheit 1 mit zwei ACPC-Streufolien, wobei der Reflektor nicht gezeigt ist. Die Diffuserplatte 5 ist eine Lenticularplatte, wobei die lineare Struktur der Lenticularplatte 5 bevorzugt längs, dass heißt parallel zu den Leuchtstoffröhren 4 orientiert ist. Auf diese Lenticularplatte 5 wird eine Streufolie 6 mit einer ACPC Struktur aufgelegt. Die lineare Struktur der ACPC-Streufolie 6 ist dabei bevorzugt quer zu der Ausrichtung der Leuchtstoffröhren 4 orientiert. Auf dieser ACPC-Streufolie 6 ist eine weitere ACPC-Streufolie 7 angeordnet, wobei deren lineare Struktur bevorzugt längs zu den Leuchtstoffröhren 4 orientiert ist. Als dritte, weitere Streufolie 8 kann beispielsweise eine Upper Diffuser, Makrofol TP 293 1-4 der Bayer MaterialScience, aufgelegt werden. Auch mit einem Abstand der Leuchtstoffröhren 4 zueinander von ≥ 40 mm und einem Abstand der Leuchtstoffröhren 4 zur Diffuserplatte 5 von ≤ 21 mm kann mit diesem bevorzugten Aufbau der Beleuchtungseinheit eine hervorragende Homogenisierung der Lichtverteilung erzielt werden, so dass die Leuchtstoffröhren 4 für das menschliche Auge nicht sichtbar erscheinen.

Fig. 1a zeigt eine Abbildung der Helligkeitsvariation der Beleuchtungseinheit aus Fig. 1, die Helligkeitsvariation wurde mit einer CCD Kamera der Fa. Firma: STARLIGHT XPRESS Ltd., Modell SXVF-H9 gemessen wurde. Die erfindungsgemäß erzielte Homogenisierung der Lichtverteilung ist so gut, dass die Lichtquellen für das menschliche Auge nicht mehr sichtbar sind.

Fig. 1b zeigt eine schräge Draufsicht auf eine Ausführungsform der erfindungsgemäßen Beleuchtungseinheit 1 mit zwei ACPC-Streufolien gemäß Fig. 1, wobei der Reflektor 2 gezeigt ist.

Fig. 2 zeigt eine schräge Draufsicht auf eine Ausführungsform der erfindungsgemäßen Beleuchtungseinheit 1 mit zwei ACPC-Streufolien 6, 7, wobei der Reflektor nicht gezeigt ist. Die Diffuserplatte 5 ist eine Lenticularplatte, wobei die lineare Struktur der Lenticularplatte 5 bevorzugt längs, dass heißt parallel zu den Leuchtstoffröhren 4 orientiert ist. Auf diese Lenticularplatte 5 wird eine Streufolie 6 mit einer ACPC Struktur aufgelegt. Die lineare Struktur der ACPC-Streufolie 6 ist dabei bevorzugt quer zu der Ausrichtung der Leuchtstoffröhren 4 orientiert. Auf dieser ACPC-Streufolie 6 ist eine weitere ACPC-Streufolie 7 angeordnet, wobei deren lineare Struktur bevorzugt längs zu den Leuchtstoffröhren 4 orientiert ist. Als dritte Streufolie 9 wird eine Streufolie mit halbkugelartiger Struktur, beispielsweise UTE 2 der Firma Mirae Nano Technology, Korea, aufgelegt. Auch mit einem Abstand der Leuchtstoffröhren 4 zueinander von ≥ 40 mm und einem Abstand der Leuchtstoffröhren zur Diffuserplatte 5 von ≤ 21 mm kann mit dieser bevorzugten Ausgestaltung der Beleuchtungseinheit 1 eine hervorragende Homogenisierung der Lichtverteilung erzielt werden, so dass die Leuchtstoffröhren 4 für das menschliche Auge nicht sichtbar erscheinen.

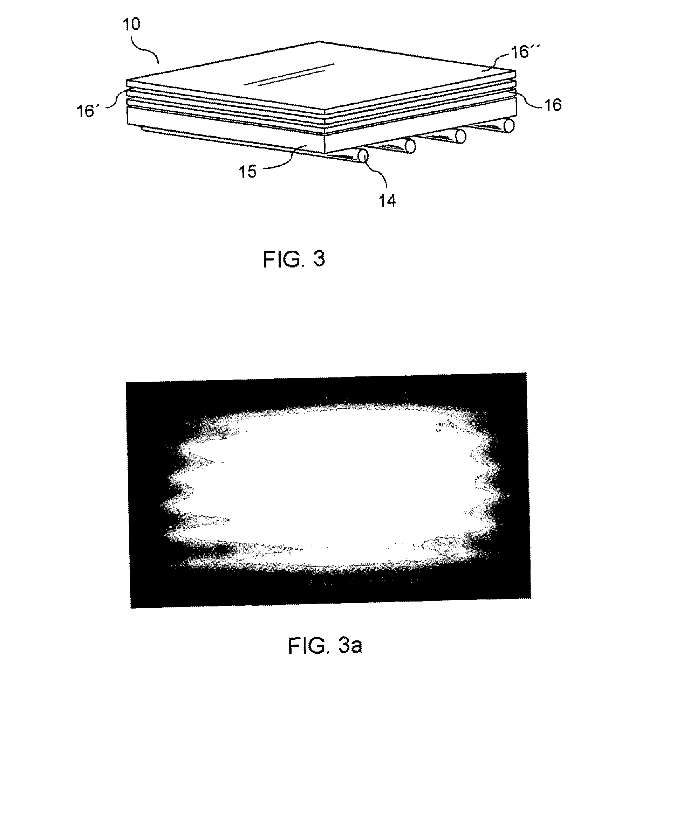

Fig. 3 zeigt eine schräge Draufsicht auf eine nicht erfindungsgemäße Beleuchtungseinheit 10 mit einer herkömmlichen nicht strukturierten Diffuserplatte 15 und drei darauf aufgelegten herkömmlichen Streufolien 16, 16' und 16" mit Streupartikeln, wobei der Reflektor nicht gezeigt ist. Die Helligkeitsvariation über den Leuchtstoffröhren 14 war deutlich schlechter als die vorstehend beschriebenen erfindungsgemäßen Beleuchtungseinheiten, da die Leuchtstoffröhren hierbei für das menschliche Auge sichtbar sind.

Fig. 3a zeigt eine Abbildung der Helligkeitsvariation der Beleuchtungseinheit aus Fig. 3. Die Helligkeitsvariation wurde mit einer CCD Kamera der Fa. Firma: STARLIGHT XPRESS Ltd., Modell SXVF-H9 gemessen wurde und ist wie vorstehend beschrieben deutlich schlechter als die der erfindungsgemäßen Beleuchtungseinheiten.

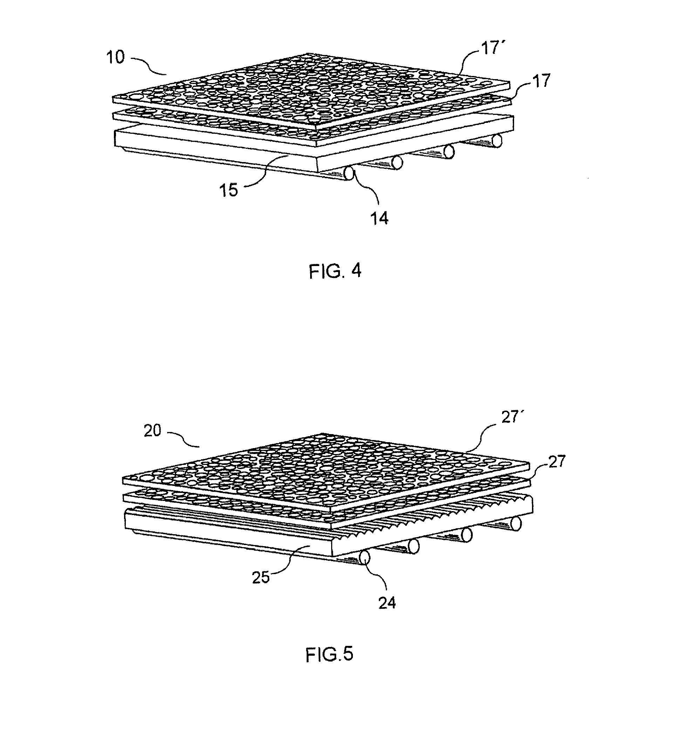

Fig. 4 zeigt eine schräge Draufsicht auf eine nicht erfindungsgemäße Beleuchtungseinheit 10 mit einer herkömmlichen, nicht strukturierten Diffuserplatte 15 und zwei darauf aufgelegten Streufolien 17 und 17' mit halbkugelartiger Oberflächenstruktur, wobei der Reflektor nicht gezeigt ist. Die Helligkeitsvariation über den Lampen 14 war bei dieser nicht erfindungsgemäßen Beleuchtungseinheit für das menschliche Auge sichtbar und damit schlechter als bei den vorstehend beschriebenen erfindungsgemäßen Beleuchtungseinheiten.

Fig. 5 zeigt eine schräge Draufsicht auf eine nicht erfindungsgemäße Beleuchtungseinheit 20 wobei auf den Lichtquellen 24 eine Lenticularplatte als Diffuserplatte 25 angeordnet ist. Auf der Lenticularplatte 25 sind zwei Streufolien 27 und 27' mit halbkugelartiger Oberflächenstruktur aufgelegt. Der Reflektor ist nicht gezeigt ist. Die Helligkeitsvariation über den Leuchtstoffröhren 24 war bei diesem nicht erfmdungsgemäßen Aufbau der Beleuchtungseinheit für das menschliche Auge sichtbar und damit schlechter als die erfindungsgemäßen Beleuchtungseinheiten.

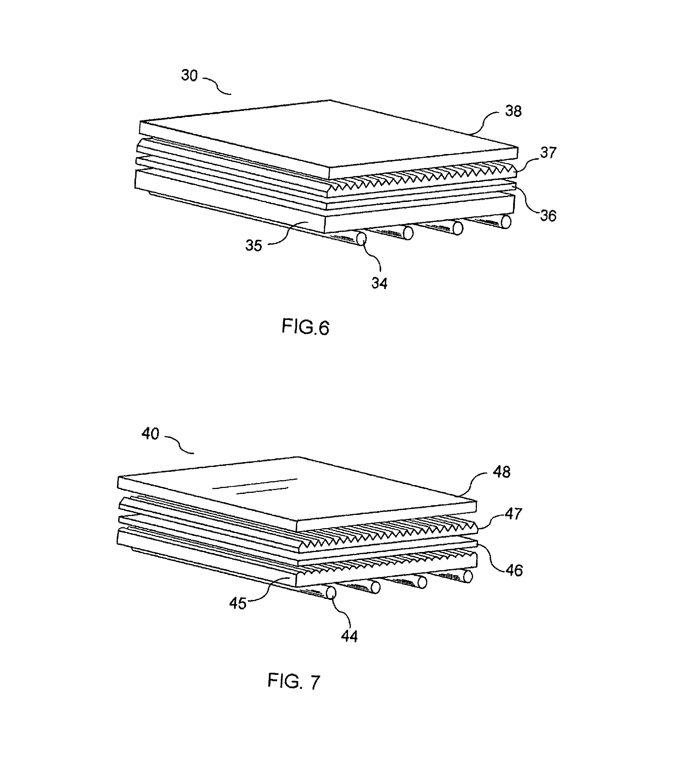

Fig. 6 zeigt eine schräge Draufsicht auf eine nicht erfindungsgemäße Beleuchtungseinheit 30 mit einer herkömmlichen, nicht strukturierten Diffuserplatte 35. Auf diese Diffuserplatte 35, die oberhalb der Lichtquellen 34 angeordnet ist, ist eine Diffuserfolie 36 eine Prismenfolie (BEF) 37 und darauf eine Dual Brightness Enhancement Folie (DBEF) 38 aufgelegt, wobei die lineare Struktur der Prismenfolie 37 längs und damit im wesentlichen parallel zu den Leuchtstoffröhren ausgerichtet ist. Der Reflektor auch in dieser Abbildung nicht gezeigt. Die Helligkeitsvariation über den Lampen 34 war bei hierbei für das menschliche Auge sichtbar und damit schlechter als bei den vorstehend beschriebenen erfindungsgemäßen Beleuchtungseinheiten.

Fig. 7 zeigt eine schräge Draufsicht auf eine nicht erfindungsgemäße Beleuchtungseinheit 40 wobei auf den Lichtquellen 44 eine Lenticularplatte als Diffuserplatte 45 angeordnet ist. Die lineare Struktur der Lenticularplatte 45 ist längs zu den CCFLs orientiert. Auf der Lenticularplatte 45 ist eine Diffuserfolie 46 eine Prismenfolie (BEF) 47 und darauf eine Dual Brightness Enhancement Folie (DBEF) 48 aufgelegt. Auf diese Diffuser-Platte wurden eine handelsübliche Prismen-Folien Vikuiti® Brightness Enhancement Film (BEF) II der Firma 3M und darauf eine handelsübliche Vikuiti® Dual Brightness Enhancement Folie (DBEF) D 400 der Firma 3M gelegt. Der Reflektor ist nicht gezeigt ist. Die Helligkeitsvariation über den Lampen 44 war, bei dieser nicht erfindungsgemäßen Aufbau der Beleuchtungseinheit für das menschliche Auge sichtbar und damit schlechter als die erfindungsgemäßen Beleuchtungseinheiten.

Die folgenden Beispiele sollen die Erfindung verdeutlichen ohne sie jedoch zu beschränken.

### Beispiele

### Erfmdungsgemäßes Beispiel 1

Eine Beleuchtungseinheit mit einem Reflektor und Leuchtstoffröhren (CCFL) mit einem Lampenmittelpunktsabstand von 50 mm, einem Lampendurchmesser von 3 mm und einem Abstand der Leuchtstoffröhren zur Diffuserplatte von 21 mm wurde vorgelegt. Als Diffuserplatte wird eine Lenticular-Diffuser-Platte LQ 1200 der Bayer Sheet Korea mit einer Dicke von 1,2 mm verwendet. Die lineare Struktur der Lenticularplatte ist längs zu den CCFLs orientiert. Auf diese Lenticularplatte wird eine Streufolie mit einer ACPC-Struktur mit folgenden Parametern aufgelegt: Akzeptanzwinkel: 40°, Verkürzungsfaktor: 0,1, Polymer: Polycarbonat, Polynombereich: Polynom 2. Ordnung. Die lineare Struktur der ACPC-Streufolie ist quer (vertikal) zu den CCFLs orientiert. Auf diese wird eine weitere identische ACPC-Streufolie gelegt, wobei deren lineare Struktur längs (parallel) zu den CCFLs orientiert ist. Als dritte Streufolie wird eine Streufolie (Upper Diffuser, Makrofol TP 293 1-4 der Bayer MaterialScience AG) eingesetzt, die eine Dicke von 220 µm aufweist. Der Aufbau dieser erfindungsgemäßen Beleuchtungseinheit ist in Figur 1 gezeigt. Die Helligkeitsvariation über den Lampen betrug 0.2 % und ist somit für das menschliche Auge nicht sichtbar. Die Helligkeitsvariation wurde mit einer CCD Kamera der Fa. Firma: STARLIGHT XPRESS Ltd., Modell SXVF-H9 gemessen und ist in Figur 1a gezeigt.

### Erfmdungsgemäßes Beispiel 2

Eine Beleuchtungseinheit mit einem Reflektor und Leuchtstoffröhren (CCFL) mit einem Lampenmittelpunktsabstand von 50 mm, einem Lampendurchmesser von 3 mm und einem Abstand der Leuchtstoffröhren zur Diffuserplatte von 21 mm wurde vorgelegt. Als Diffuserplatte wird eine Lenticular-Diffuser-Platte LQ 1200 der Bayer Sheet Korea mit einer Dicke von 1,2 mm verwendet. Die lineare Struktur der Lenticularplatte ist längs zu den CCFLs orientiert. Auf diese Lenticularplatte wird eine Streufolie mit einer ACPC Struktur mit folgenden Parametern aufgelegt: Akzeptanzwinkel: 40°, Verkürzungsfaktor: 0,1, Polymer: Polycarbonat, Polynombereich: Polynom 2. Ordnung. Die lineare Struktur der ACPC-Streufolie ist quer (vertikal) zu den CCFLs orientiert. Auf diese wird eine weitere identische ACPC-Streufolie gelegt, wobei deren lineare Struktur längs (parallel) zu den CCFLs orientiert ist. Als dritte Streufolie wird eine Streufolie mit halbkugelartiger Struktur (UTE 2 der Firma Mirae Nano Technology aus Korea) gelegt. Der Aufbau dieser erfindungsgemäßen Beleuchtungseinheit ist in Figur 2 gezeigt. Die Helligkeitsvariation über den Lampen betrug 0.2 % und ist somit für das menschliche Auge nicht sichtbar. Die Helligkeitsvariation wurde mit einer CCD Kamera der Fa. Firma: STARLIGHT XPRESS Ltd., Modell SXVF-H9 gemessen.

### Vergleichsbeispiel 1 (nicht erfindungsgemäß)

Eine Beleuchtungseinheit mit einem Reflektor und Leuchtstoffröhren (CCFL) mit einem Lampenmittelpunktsabstand von 50 mm, einem Lampendurchmesser von 3 mm und einem Abstand der Leuchtstoffröhren zur Diffuserplatte von 21 mm wurde vorgelegt. Hierbei wurde ein übliches Diffuser-Platten und Folien-Set verwendet: Als Diffuserplatte wurde eine Standard-Diffuser-Platte DQ 1200 der Bayer Sheet Korea mit einer Dicke von 1,2 mm verwendet. Auf diese Diffuser-Platte wurden drei gleiche lower diffuser Folien Kimoto GM 18803 aufgelegt. Der Aufbau dieser nicht erfindungsgemäßen Beleuchtungseinheit ist in Figur 3 gezeigt. Die Helligkeitsvariation über den Lampen betrug > 1 % und war somit für das menschliche Auge sehr gut sichtbar. Die Helligkeitsvariation wurde mit einer CCD Kamera der Fa. Firma: STARLIGHT XPRESS Ltd., Modell SXVF-H9 gemessen und ist in Figur 3a dargestellt.

### Vergleichsbeispiel 2 (nicht erfindungsgemäß)

Eine Beleuchtungseinheit mit einem Reflektor und Leuchtstoffröhren (CCFL) mit einem Lampenmittelpunktsabstand von 50 mm, einem Lampendurchmesser von 3 mm und einem Abstand der Leuchtstoffröhren zur Diffuserplatte von 21 mm wurde vorgelegt. Es wurde ein übliches DiffuserPlatten und Folien-Set verwendet: Als Diffuserplatte wurde eine Standard-Diffuser-Platte DQ 1200 der Bayer Sheet Korea mit einer Dicke von 1,2 mm verwendet. Auf diese Diffuser-Platte wurden zwei handelsübliche Streufolien mit halbkugelartiger Struktur UTE 2 der Firma Mirae Nano Technology aus Korea gelegt. Der Aufbau dieser nicht erfindungsgemäßen Beleuchtungseinheit ist in Figur 4 gezeigt. Die Helligkeitsvariation über den Lampen betrug >1 % und ist somit für das menschliche Auge sehr gut sichtbar. Die Helligkeitsvariation wurde mit einer CCD Kamera der Fa. Firma: STARLIGHT XPRESS Ltd., Modell SXVF-H9 gemessen.

### Vergleichsbeispiel 3 (nicht erfindungsgemäß)

Eine Beleuchtungseinheit mit einem Reflektor und Leuchtstoffröhren (CCFL) mit einem Lampenmittelpunktsabstand von 50 mm, einem Lampendurchmesser von 3 mm und einem Abstand der Leuchtstoffröhren zur Diffuserplatte von 21 mm wurde vorgelegt. Es wurde ein übliches Diffuser-Platten und Folien-Set verwendet: Als Diffuserplatte wurde eine Lenticular-Diffuser-Platte LQ 1200 der Bayer Sheet Korea mit einer Dicke von 1,2 mm verwendet. Die lineare Struktur der Lenticularplatte ist längs zu den CCFLs orientiert. Auf diese Diffuser-Platte werden zwei handelsübliche Streufolien mit halbkugelartiger Struktur (UTE 2 der Firma Mirae Nano Technology aus Korea) gelegt. Der Aufbau dieser nicht erfindungsgemäßen Beleuchtungseinheit ist in Figur 5 gezeigt. Die Helligkeitsvariation über den Lampen betrug >1 % und ist somit für das menschliche Auge sehr gut sichtbar. Die Helligkeitsvariation wurde mit einer CCD Kamera der Fa. Firma: STARLIGHT XPRESS Ltd., Modell SXVF-H9 gemessen.

### Vergleichsbeispiel 4 (nicht erfindungsgemäß)

Eine Beleuchtungseinheit mit einem Reflektor und Leuchtstoffröhren (CCFL) mit einem Lampenmittelpunktsabstand von 50 mm, einem Lampendurchmesser von 3 mm und einem Abstand der Leuchtstoffröhren zur Diffuserplatte von 21 mm wurde vorgelegt. Es wurde ein übliches Diffuser-Platten und Folien-Set verwendet: Als Diffuserplatte wurde eine Standard-Diffuser-Platte DQ 1200 der Bayer Sheet Korea mit einer Dicke von 1,2 mm verwendet. Auf diese Diffuser-Platte wurden eine lower Diffuserfolie, beispielsweise Kimoto 188 GM3, darauf eine handelsübliche Prismen-Folie Vikuiti® Brightness Enhancement Film (BEF) II der Fa. 3M und darauf eine handelsübliche Vikuiti® Dual Brightness Enhancement Folie (DBEF) D 400 der Firma 3M gelegt. Die lineare Struktur der Prismen-Folie ist längs zu den CCFLs orientiert. Der Aufbau dieser nicht erfmdungsgemäßen Beleuchtungseinheit ist in Figur 6 gezeigt. Die Helligkeitsvariation über den Lampen betrug >1 % und ist somit für das menschliche Auge sehr gut sichtbar. Die Helligkeitsvariation wurde mit einer CCD Kamera der Fa. Firma: STARLIGHT XPRESS Ltd., Modell SXVF-H9 gemessen.

### Vergleichsbeispiel 5 (nicht erfindungsgemäß)

Eine Beleuchtungseinheit mit einem Reflektor und Leuchtstoffröhren (CCFL) mit einem Lampenmittelpunktsabstand von 50 mm, einem Lampendurchmesser von 3 mm und einem Abstand der Leuchtstoffröhren zur Diffuserplatte von 21 mm wurde vorgelegt. Es wurde ein übliches Diffuser-Platten und Folien-Set verwendet: Als Diffuserplatte wurde eine Lenticular-Diffuser-Platte LQ 1200 der Bayer Sheet Korea mit einer Dicke von 1,2 mm verwendet. Die lineare Struktur der Lenticularplatte war längs zu den CCFLs orientiert. Auf diese Diffuser-Platte wurden eine lower Diffuserfolie, beispielsweise Kimoto 188GM3, eine handelsübliche Prismen-Folien Vikuiti® Brightness Enhancement Film (BEF) II der Fa. 3M und darauf eine handelsübliche Vikuiti® Dual Brightness Enhancement Folie (DBEF) D 400 der Firma 3M gelegt. Der Aufbau dieser nicht erfindungsgemäßen Beleuchtungseinheit ist in Figur 7 gezeigt. Die lineare Struktur der Prismen-Folie ist längs zu den CCFLs orientiert. Die Helligkeitsvariation über den Lampen betrug >1 % und ist somit für das menschliche Auge sehr gut sichtbar. Die Helligkeitsvariation wurde mit einer CCD Kamera der Fa. Firma: STARLIGHT XPRESS Ltd., Modell SXVF-H9 gemessen.

Zusammenfassend werden erfindungsgemäß mehrschichtige Beleuchtungseinheiten bereitgestellt, die eine verbesserte Homogenisierung der Helligkeitsverteilung über den darin eingesetzten Lichtquellen, insbesondere Leuchtstoffröhren aufweisen und besonders geeignet für die Verwendung in anspruchsvollen Hinterleuchtungseinheiten und die Verwendung in Flüssigkristall-Flachbildschirmen sind. Wesentlich ist in den erfindungsgemäßen Beleuchtungseinheiten die spezielle Abfolge aus einer Lenticularplatte, der darauf aufgelegten ACPC Streufolien und der wiederum darauf angeordneten Streufolie. Es kann mit erfindungsgemäßen Beleuchtungseinheiten und den darin eingesetzten speziellen Kombinationen von Streufolien vorteilhafterweise auch bei großen Abständen der Lichtquellen zueinander kombiniert mit einem geringen Abstand der Lichtquellen zur Diffuserplatte eine besonders homogene Lichtverteilung mit Helligkeitsschwankungen von ≤ 1 % erzielt werden.

## Patentansprüche

1. Mehrschichtige Beleuchtungseinheit mindestens enthaltend einen Reflektor zwei oder mehr Lichtquellen und mindestens eine Diffuserplatte **dadurch gekennzeichnet, dass** die Lichtquellen jeweils einen Abstand von mindestens ≥ 30 mm zueinander aufweisen und der Abstand der Lichtquellen zur Diffuserplatte ≤ 25 mm beträgt und als Diffuserplatte eine Lenticularplatte eingesetzt wird, wobei auf der Lenticularplatte mindestens eine Advanced Compound Parabolic Concentrator Streufolie und darauf mindestens eine weitere Streufolie angeordnet ist.

2. Mehrschichtige Beleuchtungseinheit nach Anspruch 1 **dadurch gekennzeichnet, dass** die Lichtquellen Leuchtstoffröhren sind und die Lenticularplatte eine lineare Struktur aufweist, die parallel zu den Leuchtstoffröhren ausgerichtet ist.

3. Mehrschichtige Beleuchtungseinheit nach Anspruch 1 oder 2 **dadurch gekennzeichnet, dass** die Struktur der Advanced Compound Parabolic Concentrator Streufolie mindestens annähernd in einem Winkel 90 °C zur Struktur der Lenticularplatte angeordnet ist.

4. Mehrschichtige Beleuchtungseinheit nach Anspruch 1 **dadurch gekennzeichnet, dass** zwischen der ersten Advanced Compound Parabolic Concentrator Streufolie und der weiteren Streufolie mindestens eine zweite Advanced Compound Parabolic Concentrator Streufolie angeordnet ist.

5. Mehrschichtige Beleuchtungseinheit nach Anspruch 4 **dadurch gekennzeichnet, dass** die Struktur der zweiten Advanced Compound Parabolic Concentrator Streufolie mindestens annähernd in einem Winkel von 90 °C zur Struktur der ersten Advanced Compound Parabolic Concentrator Streufolie ausgerichtet ist.

6. Mehrschichtige Beleuchtungseinheit nach Anspruch 1 **dadurch gekennzeichnet, dass** auf der weiteren Streufolie eine Prismenfolie und/oder eine reflektierende Polarisationsfolie angeordnet ist.

7. Mehrschichtige Beleuchtungseinheit nach Anspruch 1 **dadurch gekennzeichnet, dass** die weitere Streufolie eine Streufolie mit einer halbkugelartigen Oberflächenstruktur ist.

8. Flüssigkristall-Bildschirm enthaltend eine Beleuchtungseinheit gemäß Anspruch 1.
